(19) Europäisches Patentamt
European Patent Office
Office européen des brevets

(11) Numéro de publication: **0 011 002**
**B1**

(12) **FASCICULE DE BREVET EUROPEEN**

(45) Date de publication du fascicule du brevet: **22.12.82**

(21) Numéro de dépôt: **79400714.6**

(22) Date de dépôt: **05.10.79**

(51) Int. Cl.³: **C 07 C 69/92**, C 07 C 121/75, C 07 C 65/21, C 09 K 3/34 //C07C51/58, C07C120/00, C07C51/373

(54) **Composé organique mésomorphe dont la formule chimique dérive d'un acide alkoxy-4 tétrafluorobenzoique, et dispositif à cristal liquide utilisant un tel composé.**

(30) Priorité: **27.10.78 FR 7830605**

(43) Date de publication de la demande:
**14.05.80 Bulletin 80/10**

(45) Mention de la délivrance du brevet:
**22.12.82 Bulletin 82/51**

(84) Etats contractants désignés:
**AT CH DE GB IT NL**

(56) Documents cités:
**FR - A - 2 173 165**
**FR - A - 2 181 943**
**FR - A - 2 297 201**
**US - A - 3 925 237**
**US - A - 3 951 846**

**AUSTRALIAN JOURNAL OF CHEMISTRY, vol. 23, 1970, G.B. DEACON: "Preparation and properties of some triphenyllead carboxylates", pages 1359—1366**

**CHEMICAL ABSTRACTS, vol. 72, 1970 abrégé no. 89960v, page 340 Columbus, Ohio, USA, T. N. VASILEVSKAYA et al.: "Reaction of polyfluoro-substituted aromatic ketones with potassium cyanide"**

(73) Titulaire: **THOMSON-CSF**
**173, Boulevard Haussmann**
**F-75379 Paris Cedex 08 (FR)**

(72) Inventeur: **Beguin, Alain**
**"THOMSON-CSF" - SCPI 173, bld Haussmann**
**F-75360 Paris Cedex 08 (FR)**
Inventeur: **Dubois, Jean-Claude**
**"THOMSON-CSF" - SCPI 173, bld Haussmann**
**F-75360 Paris Cedex 08 (FR)**
Inventeur: **Zann, Annie**
**"THOMSON-CSF" - SCPI 173, bld Haussmann**
**F-75360 Paris Cedex 08 (FR)**

(74) Mandataire: **Giraud, Pierre et al,**
**THOMSON-CSF SCPI 173, Bld Haussmann**
**F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 011 002 B1**

Composé organique mésomorphe dont la formule chimique dérive d'un acide alkoxy-4 tétrafluorobenzoique, et dispositif à cristal liquide utilisant un tel composé.

L'invention concerne un procédé organique mésomorphe dont la formule chimique est dérivée d'un acide alkoxy-4 tétrafluorobenzoïque. Le composé pur, les mélanges de ce composé avec d'autres composés mésomorphes, enfin la synthèse de ce composé font partie de l'invention ainsi que les cristaux liquides ainsi obtenus.

Plusieurs composés de la même série, présentent au moins une phase énantiotropique ou monotropique. Ils peuvent donc être utilisés comme cristaux liquides, soit à l'état pur soit en mélange avec des corps de la série ou d'autres cristaux liquides.

On connaît, notamment par l'ouvrage "Flüssige Kristalle in Tabellen" du Docteur DIETRICH DEMUS et des Docteurs-Ingénieurs HEINRICH DEMUCH et HORST ZASCHKE, édité par V.E.B. Deutsche Verlag für Grundstoff Industrie Leipzig 1974, les propriétés mésomorphes des composés de formule:

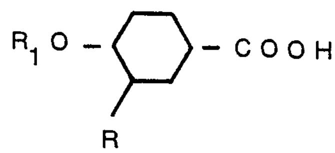

où $R_1$ représente un groupement alkyl et R un halogène qui peut être le fluor. On observe toutefois que les gammes de température de ces composés sont étroites et relativement élevées.

On connaît en outre, par le document "Australian Journal of Chemistry", vol. 23, Année 1970, une méthode de synthèse d'acides alkoxy tétrafluorobenzoïques notamment les acides 4-méthoxy et 4-éthoxy tétrafluorobenzoïques. On a expérimenté ces composés, dans les laboratoires de la Demanderesse, (voir plus loin les résultats consignés sous les rubriques des exemples No 1 à 8) et trouvé qu'ils ne sont pas mésomorphes ou seulement mésomorphes du type monotropique.

On connaît enfin, par le document FR—A—2 181 943 (Eastern Kodak), revendication 1, des cristaux liquides nématiques de formule générale:

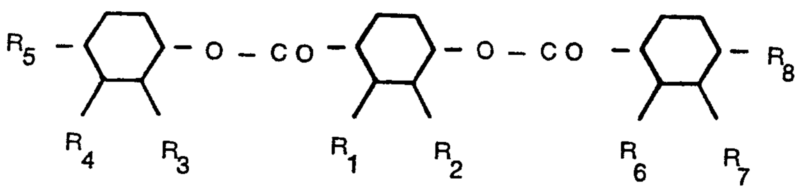

dans lesquels $R_5$ et $R_8$ représentent des radicaux alkyl ou alkoxy ou encore CN, les radicaux $R_1$ à $R_4$ et $R_6$ ou $R_7$ représentant soit l'ion d'hydrogène, soit différents radicaux de substitution.

Les composés connus présentent les inconvénients suivants:

— une gamme de température souvent très étroite et relativement élevée;
— une relative complexité de la synthèse de fabrication;
— une stabilité thermique relativement faible.

L'invention vise à remédier à ces inconvénients, notamment en ce qui concerne la facilité de synthèse. En outre, les cristaux liquides nématiques obtenus à partir de composés selon l'invention présentent un avantage surprenant à savoir une très remarquable facilité d'alignement de leurs molécules dans un champ électrique.

Le composé organiqué mésomorphe selon l'invention répond à la formule générale suivante:

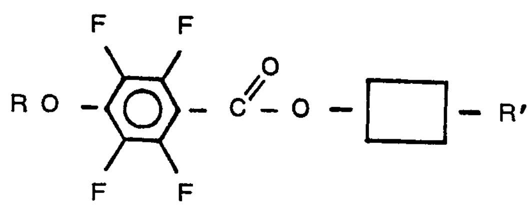

où R désigne un radical alkyl à n atomes de carbone (n entier de 1 à 15) et R' désigne:

— soit un corps simple choisi parmi l'hydrogène, le fluor, le chlore, le brome, l'iode;
— soit un radical choisi parmi $CF_3$, CN, $C_m H_{2m+1}$, $C_m H_{2m+1}O$ (m étant un entier de 1 à 15).

Le symbole

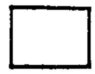

représente un radical à deux liaisons libres choisi parmi:

— un noyau aromatique ou un radical plus complexe contenant au moins deux noyaux aromatiques choisi parmi:

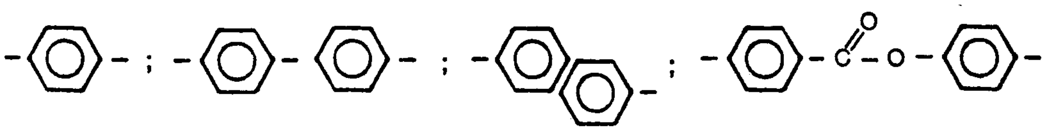

— un radical cyclohexane ou un radical plus complexe contenant au moins un radical cyclohexane choisi parmi:

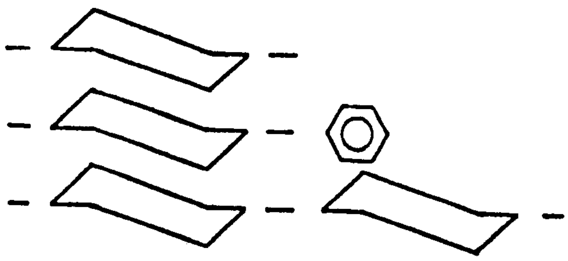

*Schéma général de synthèse d'un composé selon l'invention:*

La fabrication d'un composé selon l'invention comporte trois réactions principales

1°) En phase liquide comprenant essentiellement ROH (R étant un radical alkyl) à 60°C, on fait réagir R O Na avec de l'acide pentaflurobenzoïque:

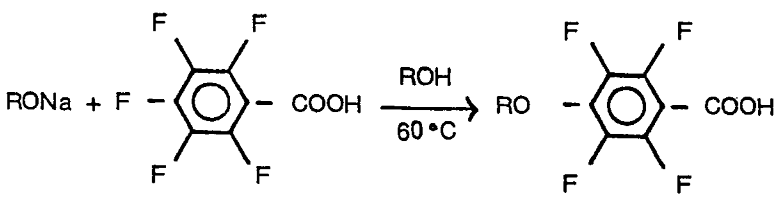


pour obtenir de l'acide alkoxy-4 tétrafluorobenzoïque, la durée optimale de réaction se situant entre 40 et 50 heures.

2°) Suit une réaction classique de synthèse de chlorure d'acide:

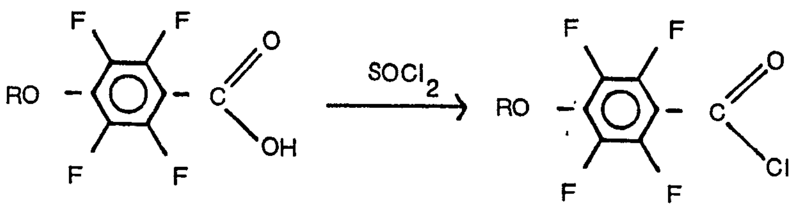


3°) Enfin, on procède à une réaction classique d'estérification du chlorure obtenu ci-dessus:

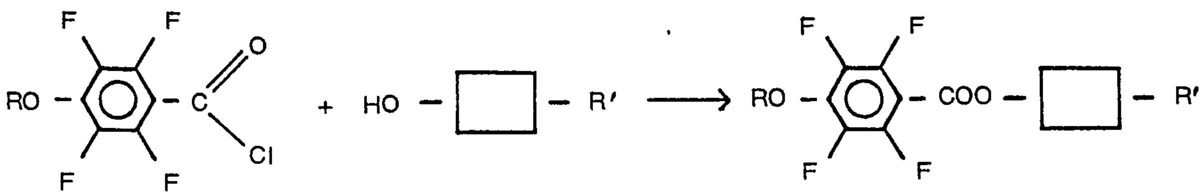

*Exemple de synthèse:*

On considère le cas de:

R = $C_6H_{13}$;

R' = CN

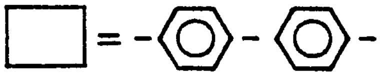

Les trois réactions du schéma de synthèse donnent lieu aux modes opératoires suivants:

1°) *Synthèse de l'acide hexyloxy-4 tétrafluorobenzoïque:*

A 500 ml d'hexanol-1 on ajoute 5 g (0,22 mole) de sodium en morceau. On laisse l'hexanolate se former, puis on ajoute 21,2 g (0,1 mole) d'acide pentafluorobenzoïque. On porte la température de la solution à 60°C pendant 44 heures. On verse ensuite la solution dans 800 cc d'eau puis on acidifie à l'acide chlorhydrique 5 N (environ 40 centimètres-cube). On extrait la solution à l'éther, on la lave puis on la sèche par sulfate de sodium. On distille le solvant. On recueille 30,1 g de produit brut que l'on recristallise par deux fois dans l'hexane. On recueille 10 g de produit pur, soit un rendement de 34%.

Les températures de transition de ce produit figurent dans le tableau I, ci-après, à l'exemple No 6.

2°) *Réaction de formation du chlorure d'acide:*

A 2,94 g ($10^{-2}$ moles) d'acide hexyloxy-4 tétrafluorobenzoïque on ajoute 1,5 ml de chlorure de thionyle. On porte à reflux pendant 2 heures puis on distille le chlorure de thionyle en excès. On recueille 3,12 g de chlorure d'hexyloxy-4 tétrafluorobenzoyle, soit un rendement de 100%.

3° *Réaction finale:*

A une solution de 390 mg ($2.10^{-3}$ mole) d'hydroxy-4 cyano-4' biphényl dans 2,5 ml de pyridine, on ajoute 625 mg ($2.10^{-3}$ mole) de chlorure d'hexyloxy-4 tétrafluorobenzoyle. On agite à température ambiante pendant 22 heures, puis on verse dans un mélange de 25 g de glace et 2 cc d'acide sulfurique concentré. On extrait à l'éther puis on lave la solution organique à l'eau et on la sèche sur sulfate de sodium. L'éther est distillé. On recueille 900 mg de produit brut que l'on purifie par chromatographie sur colonne de silice avec élution au toluène. Le produit obtenu est recristallisé dans l'éthanol. On recueille 650 mg d'hexyloxy-4 tétrafluorobenzoate de p-cyanobiphényl. Le rendement est d'environ 70%.

Les températures de transition de ce produit figurent au tableau I ci-après à l'exemple No 21.

TABLEAU I

Les conventions adoptées dans le tableau sont les suivantes:

K: phase cristalline solide;

N: phase nématique;

I: phase isotrope;

$S_A$: phase smectique type A;

(. 57): phase observée en-dessous du point du fusion, soit en-dessous de 57°C (par exemple).

Toutes les températures sont en degrés Celsius.

| Exemple No. | R | 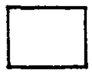 | R' | K $S_A$ N I |
|---|---|---|---|---|
| 1 | $C_7H_{15}$ | 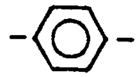 | CN | . 39,5 . |
| 2 | $C_8H_{17}$ | 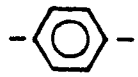 | $CF_3$ | . 45 (.19) . |
| 3 | $C_2H_5$ | Note (a) | $C_5H_{11}$ | . 98 .168,5 . |
| 4 | $C_3H_7$ | Note (a) | $C_5H_{11}$ | . 100 .163 . |
| 5 | $C_7H_{15}$ | Note (a) | $C_5H_{11}$ | . 103 .144 . |
| 6 | $C_8H_{17}$ | Note (a) | $C_5H_{11}$ | . 98 .140 . |
| 7 | $C_6H_{13}$ | Note (b) | $C_6H_{13}$ | . 81 .132 . |
| 8 | $C_7H_{15}$ | Note (b) | $C_6H_{13}$ | . 81,5 .127 . |
| 9 | $C_2H_5$ | Note (b) | CN | . 131 .223 . |
| 10 | $C_3H_7$ | Note (b) | CN | . 98 .212,5 . |
| 11 | $C_4H_9$ | Note (b) | CN | . 74 .207 . |
| 12 | $C_5H_{11}$ | Note (b) | CN | . 68 .193,5 . |
| 13 | $C_6H_{13}$ | Note (b) | CN | . 75 .(.35) .187 . |
| 14 | $C_7H_{15}$ | Note (b) | CN | . 68,5 .176,5 . |
| 15 | $C_8H_{17}$ | Note (b) | CN | . 66 .120 .172 . |

Note (a) : 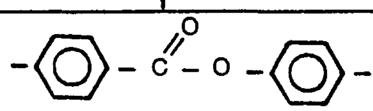

Note (b) : 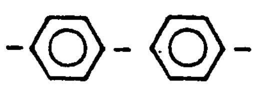

On voit que certaines gammes de température, dans lesquelles le cristal liquide est nématique, sont remarquablement larges. Il est possible d'obtenir des gammes de températures comprenant l'ambiante en utilisant des mélanges des composés selon l'invention.

Parmi les avantages des cristaux liquides ainsi obtenus on peut citer:

— leur grande stabilité thermique, par exemple jusqu'à 230°C pour le composé No 13, ainsi qu'il résulte d'une mesure effectuée en thermogravimétrie;

— la facilité avec laquelle on obtient leur alignement: par exemple alignement parallèle aux électrodes (homéotrope) par un traitement de surface au monoxyde de silicium; alignement perpendiculaire en traitant les électrodes au moyen d'un dépôt de silane à longue chaîne paraffinique;

— grande anisotropie positive pour les composés comportant un radical CN, notamment pour les exemples 9 à 15.

Le tableau II donne les valeurs des constantes diélectriques respectivement parallèle $\varepsilon_{//}$ et perpendiculaire $\varepsilon_{\perp}$ définies comme dans le cas de l'orientation dans un champ magnétique de très grande amplitude, mais dans ce cas particulier en orientant les molécules du cristal liquide par les méthodes d'alignement signalées ci-avant. Dans une troisième colonne du tableau on donne la différence de ces deux constantes $\varepsilon$ a qui est l'anisotropie du cristal liquide. Les lignes du tableau correspondent à trois températures différentes de mesure. Une différence de potentiel alternative de fréquence 10 KHz est appliquée entre électrodes.

TABLEAU II

| T °C | $\epsilon_{//}$ | $\epsilon_{\perp}$ | a |
|---|---|---|---|
| 84 | 14,90 | 5,76 | 9,14 |
| 93 | 14,60 | 5,69 | 8,91 |
| 103 | 14,40 | 5,63 | 8,77 |

Les composés purs ou en mélange son utilisables dans les dispositifs de visualisation du type:
— nématique twisté, pour les composés seulement nématiques,
— thermo-optique, à mémoire, pour les composés présentant une phase smectique A.

Les composés ne présentant pas de phase mésomorphe à l'état pur sont susceptibles d'utilisation dans des dispositifs à cristal liquide en les mélangeant avec d'autres composés présentant une phase mésomorphe. De tels mélanges ont l'avantage de présenter généralement une gamme de température plus étendue.

**Revendications**

1. Composé organique mésomorphe, caractérisé en ce qu'il répond à la formule chimique générale:

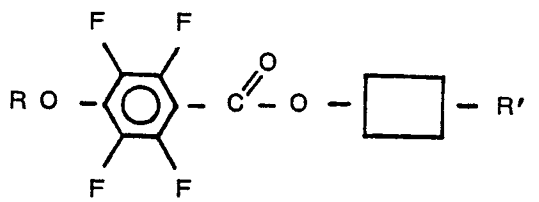

dans laquelle R désigne un radical alkyl à n atomes de carbone, n étant un entier de 1 à 15;
R' désigne soit un corps simple choisi parmi l'hydrogène, le fluor, le chlore, le brome, l'iode, soit un radical choisi parmi $CF_3$, CN, $C_m H_{2m+1}$, ou Cm $H_{2m+1}$ O, m étant un entier de 1 à 15;

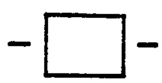

est un symbole représentant un radical à deux liaisons libres choisi parmi:
· un noyau aromatique ou un radical contenant au moins deux noyaux aromatiques choisi parmi:

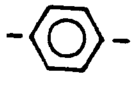 ; 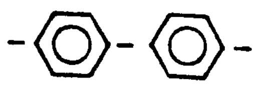 ; 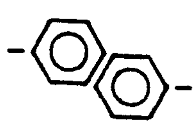 ; 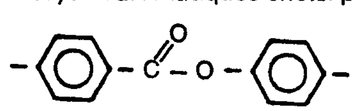

· soit un radical cyclohexane ou un radical plus complexe contenant au moins un radical cyclohexane choisi parmi:

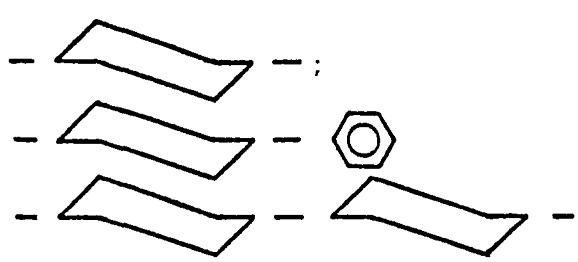

2. Composé organique suivant la revendication 1, caractérisé en ce que l'on a:

R = $C_7H_{15}$

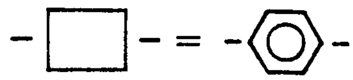

R' = CN.

3. Composé organique suivant la revendication 1, caractérisé en ce que l'on a:

R = $C_8H_{17}$.

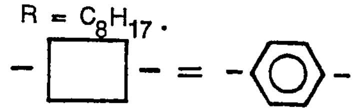

R' = $CF_3$.

4. Composé organique suivant la revendication 1, caractérisé en ce qu'il répond à la formule:

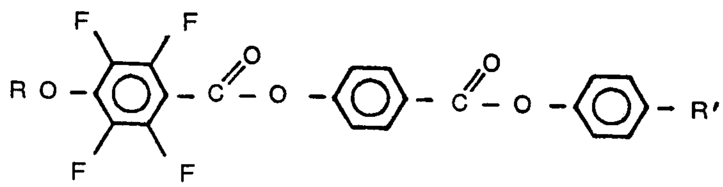

dans laquelle on a:
R = $C_2H_5$, $C_3H_7$, $C_7H_{15}$ ou $C_8H_{17}$;
R' = $C_5H_{11}$.

5. Composé organique suivant la revendication 1, caractérisé en ce qu'il répond à la formule:

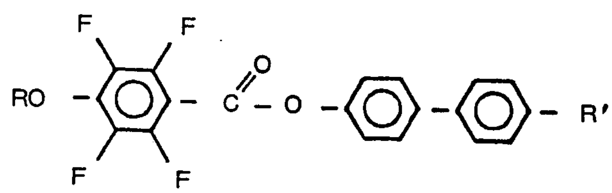

dans laquelle on a:
R = $C_2H_5$, $C_3H_7$, $C_4H_9$, $C_5H_{11}$, $C_6H_{13}$, $C_7H_{15}$ ou $C_8H_{17}$;
R' = CN.

6. Composé organique suivant la revendication 1, caractérisé en ce qu'il répond à la formule:

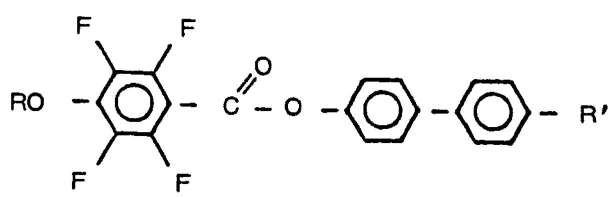

dans laquelle on a:
R = $C_6H_{13}$, $C_7H_{15}$
R' = $C_6H_{13}$.

7. Dispositif à cristal liquide, caractérisé en ce qu'il comporte un composé organique suivant l'une des revendications 1 à 6.

## Claims

1. Organic mesomorphous compound characterized in that it corresponds to the general chemical formula:

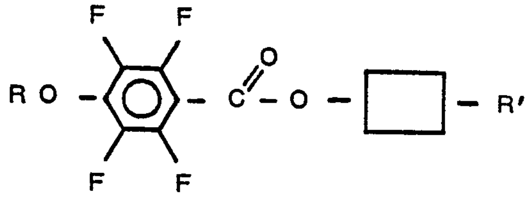

wherein R represents an alkyl group with n carbon atoms, n being an integer of from 1 to 15; R′ represents either a single body selected from hydrogen, fluorine, chlorine, bromine, iodine, or a group selected from $CF_3$, CN, $C_mH_{2m+1}$, or $C_mH_{2m+1}O$, m being an integer of from 1 to 15;

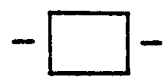

represents a group having two free bonds selected from

— either an aromatic nucleus or a group containing at least two aromatic nuclei selected from the group consisting of:

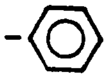 ; 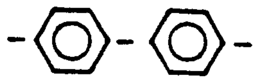 ; 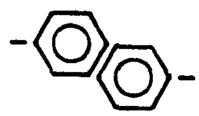 ; 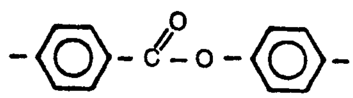 ;

— or a cyclohexane group or a more complex group containing at least one cyclohexane group selected from the group consisting of

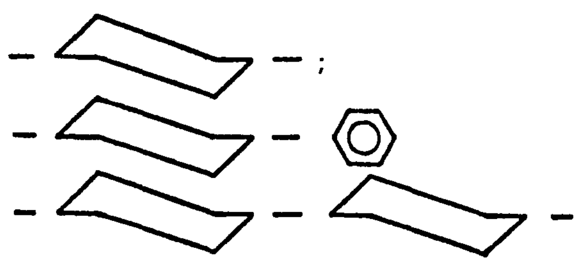

2. Organic compound according to claim 1, characterized by the following meanings:

$R = C_7H_{15}$,

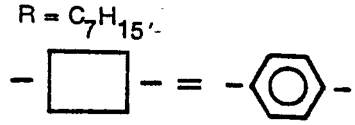

R′ = C N.

3. Organic compound according to claim 1, characterized by the following meanings:

$R = C_8H_{17}$,

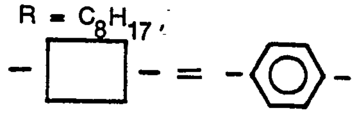

R′ = C $F_3$.

4. Organic compound according to claim 1, characterized in that it corresponds to the formula

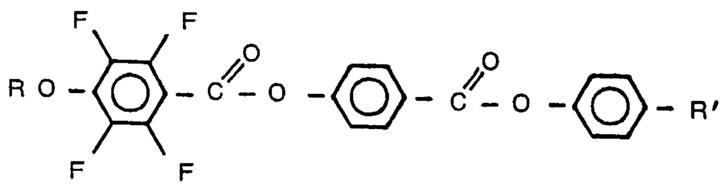

wherein

R represents $C_2H_5$, $C_3H_7$, $C_7H_{15}$ or $C_8H_{17}$; and

R′ represents $C_5H_{11}$.

5. Organic compound according to claim 1, characterized in that it corresponds to the formula:

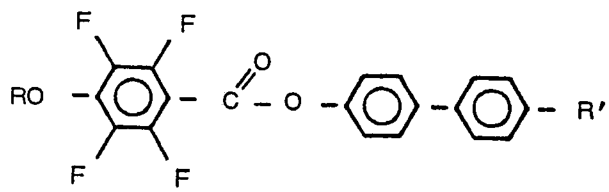

wherein

R represents $C_2H_5$, $C_3H_7$, $C_4H_9$, $C_5H_{11}$, $C_6H_{13}$, $C_7H_{15}$ or $C_8H_{17}$; and

R′ represents CN.

6. Organic compound according to claim 1, characterized in that it corresponds to the formula:

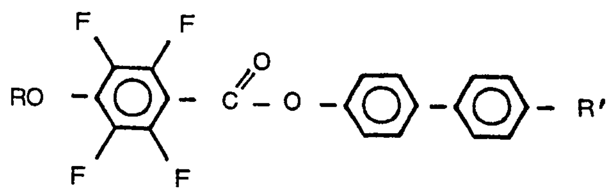

wherein

R represents $C_6H_{13}$, $C_7H_{15}$, and

R′ represents $C_6H_{13}$.

7. Liquid crystal arrangement characterized in that it comprises an organic compound according to any one of claims 1 to 6.

**Patentansprüche**

1. Mesomorphe organische Verbindung, gekennzeichnet durch die allgemeine Formel

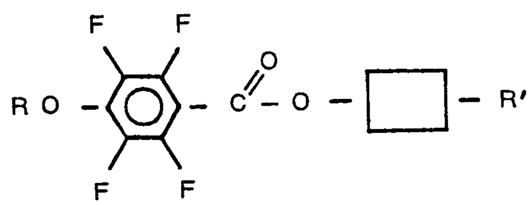

worin R einen Alkylrest mit n Kohlenstoffatomen,

n eine ganze Zahl von 1 bis 15;

R′ entweder ein Wasserstoff-, Fluor-, Chlor-, Brom- oder Jod-Atom oder einen $CF_3$—, CN— $C_mH_{2m+1}$ — oder $C_mH_{2m+1}O$— Rest;

m eine ganze Zahle von 1 bis 15;

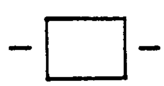

einen Rest mit 2 freien Bindungen, der aus folgenden Resten ausgewählt ist:

— ein aromatischer Kern oder ein mindestens zwei aromatische Kerne enthaltender Rest, ausgewählt unter den folgenden

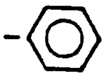 ; 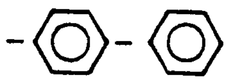 ; 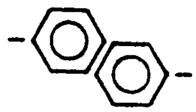 ; 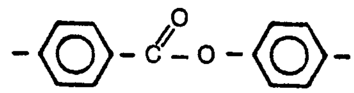 ;

— ein Cyclohexanrest oder ein komplexerer Rest, der mindestens einen Cyclohexanrest enthält, ausgewählt unter den folgenden:

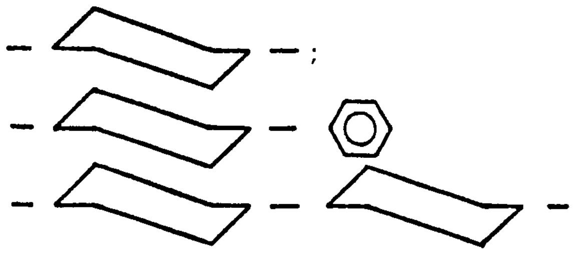

bedeuten.

2. Organische Verbindung nach Anspruch 1, dadurch gekennzeichnet, daß

$R = C_7H_{15}$

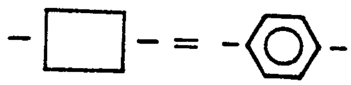

$R' = CN$

bedeuten.

3. Organische Verbindung nach Anspruch 1, dadurch gekennzeichnet, daß

$R = C_8H_{17}$

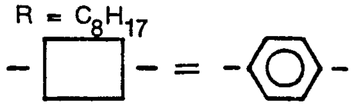

$R' = CF_3$

bedeuten.

4. Organische Verbindung nach Anspruch 1, gekennzeichnet durch die allgemeine Formel

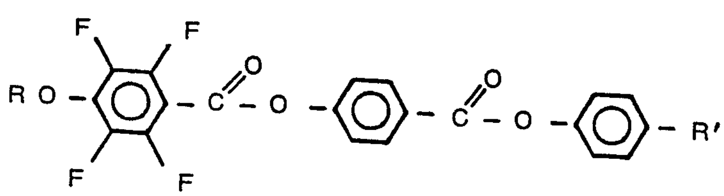

worin

$R = C_2H_5$, $C_3H_7$, $C_7H_{15}$ oder $C_8H_{17}$ und
$R' = C_5H_{11}$ bedeuten.

5. Organische Verbindung nach Anspruch 1, gekennzeichnet durch die allgemeine Formel

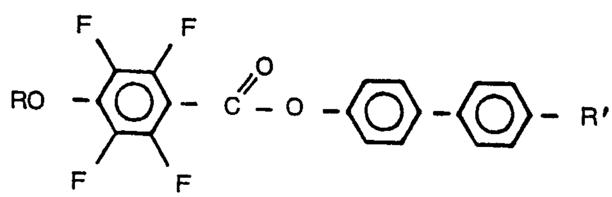

worin

$R = C_2H_5$, $C_3H_7$, $C_4H_9$, $C_5H_{11}$, $C_6H_{13}$, $C_7H_{15}$ oder $C_8H_{17}$ und
$R' = CN$ bedeuten.

6. Organische Verbindung nach Anspruch 1, gekennzeichnet durch die allgemeine Formel

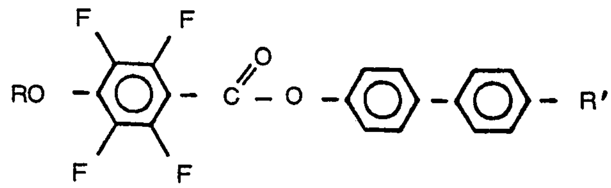

worin

$R = C_6H_{13}$, $C_7H_{15}$ und

$R' = C_6H_{13}$ bedeuten.

7. Flüssigkristallanordnung, dadurch gekennzeichnet, daß sie eine organische Verbindung gemäß einem der Ansprüche 1 bis 6 aufweist.